# EUROPÄISCHE PATENTSCHRIFT

(11) **EP 3 569 745 B1**
(45) Veröffentlichungstag und Bekanntmachung des Hinweises auf die Patenterteilung: **01.02.2023**
(21) Anmeldenummer: 19174135.4
(22) Anmeldetag: 13.05.2019
(51) Int. Cl.: D01H 4/32, F16K 5/04, F16K 5/12, D01H 4/36, D01H 4/38

(54) **OFFENENDSPINNVORRICHTUNG FÜR EINE OFFENENDSPINNMASCHINE**
OPEN END SPINNING ARRANGEMENT FOR AN OPEN END SPINNING MACHINE
DISPOSITIF DE FILATURE POUR UN MÉTIER À FILER À BOUT LIBRE

(30) Priorität: 16.05.2018 DE 102018111775
(43) Veröffentlichungstag der Anmeldung: 20.11.2019
(73) Patentinhaber: Maschinenfabrik Rieter AG, 8406 Winterthur (CH)
(72) Erfinder: POHN, Romeo, 85290 Geisenfeld/Rottenegg (DE); WEIDNER-BOHNENBERGER, Stephan, 85051 Ingolstadt (DE); RAVE, Henning, 85123 Karlskron (DE); STAMPFER, Alexander, 85051 Ingolstadt (DE); STAHLECKER, Gerd, 73054 Eislingen/Fils (DE); KÜBLER, Markus, 73312 Geislingen (DE); KROHMER, Siegfried, 72660 Beuren (DE); RIEDEL, Frank, 73061 Ebersbach (DE); WOLLINGER, Helmut, 73054 Eislingen/Fils (DE); FRANK, Andreas, 89150 Laichingen (DE)
(74) Vertreter: Canzler & Bergmeier Patentanwälte Partnerschaft mbB

(56) Entgegenhaltungen:
- EP-A1- 1 744 086
- CN-U- 205 934 188
- DE-A1-102004 010 328
- DE-A1-102005 004 439

## Beschreibung

Die vorliegende Erfindung betrifft eine Offenendspinnvorrichtung mit einer in einem Auflösewalzengehäuse umlaufenden Auflösewalze, wobei das Auflösewalzengehäuse eine erste, eine X-Richtung des Auflösewalzengehäuses definierende Seitenwand aufweist, in welcher eine an Umgebungsluft angeschlossene Schmutzabscheideöffnung angeordnet ist, welche einen ersten Zuluftstrom ermöglicht. Weiter weist das Auflösewalzengehäuse eine an Umgebungsluft angeschlossene Ansaugöffnung auf, welche einen zweiten Zuluftstrom ermöglicht und welche mit einem im Inneren des Auflösewalzengehäuses mündenden Bypasskanal verbunden ist. Weiterhin betrifft die Erfindung eine solche Offenendspinnvorrichtung, bei welcher der zweite Zuluftstrom mittels eines Drehventils regulierbar ist, sowie ein Drehventil.

Auflösewalzengehäuse mit einer Schmutzabscheideöffnung und einer zusätzlichen Ansaugöffnung bzw. Bypassöffnung sind im Stand der Technik in verschiedenen Ausführungen bekannt geworden. Die Bypassöffnung dient dabei dazu, der Offenendspinnvorrichtung für den Fasertransport unabhängig von der Schmutzabscheideöffnung Luft zuzuführen. Aufgrund der Bypassöffnung wird die Luftzufuhr durch die Schmutzabscheideöffnung hindurch in das Auflösewalzengehäuse begrenzt, so dass die in dem aufzulösenden Fasermaterial enthaltenen Schmutzpartikel besser abgeschieden werden können. Insbesondere ist es hierdurch möglich, auch leichtere Schmutzpartikel abzuscheiden, welche ansonsten mit dem Zuluftstrom mitgerissen würden und in dem Fasermaterial verbleiben würden. Häufig ist der die Zuluftstrom durch die Bypassöffnung regulierbar, so dass die Wirkung der Schmutzabscheidung einstellbar ist und an verschiedene Spinnmaterialien angepasst werden kann.

Aus der DE 196 18 414 B4 ist eine solche Offenendspinnvorrichtung mit einem Auflösewalzengehäuse bekannt, welches über eine Schmutzabscheideöffnung und eine Bypassöffnung verfügt. Bei dieser Offenendspinnvorrichtung mündet der mit der Bypassöffnung verbundene Zuluftkanal an der Frontseite der Offenendspinnvorrichtung. Dort ist die Öffnung des Zuluftkanals gut zugänglich, so dass Einstellungen des Zuluftstromes in einfacher Weise vorgenommen werden können. Allerdings wird durch diese Anordnung der Luftstrom innerhalb des Auflösewalzengehäuses um 90° umgelenkt, um dann in Umfangsrichtung auf die Garnitur der Auflösewalze zu treffen. Der Zuluftkanal neigt daher dazu, sich mit Faserflug zu zusetzen.

In der DE 10 2004 010 328 A1 wird daher vorgeschlagen, ein Drehventil einzusetzen, dass eine derartige Umlenkung des Zuluftstromes zumindest in der Maximalöffnungsstellung vermeidet. Der Zuluftkanal bzw. Bypasskanal wird hierzu nicht mehr an die Frontseite der Offenendspinnvorrichtung geführt, sondern endet in einem seitlichen Bereich des Auflösewalzengehäuses. Dabei besteht jedoch die Gefahr, dass über die Ansaugöffnung des Zuluftkanals Fasern aus der Umgebung eingesaugt werden. Auch das Regulieren des Zuluftstromes kann bei diesem Drehventil erschwert sein.

Die DE 10 2005 004 439 A1 zeigt ein Drehventil zum Einstellen der Temperatur in einem Passagierraum eines Kraftfahrzeugs, welches den Durchfluss von warmem Wasser durch einen Wärmetauscher einstellt. Um die Durchflussmenge einstellen zu können, weist das Ventil einen sich über einen möglichst großen Umfangsbereich des Ventilbolzens erstreckenden Durchflusseinstellschlitz auf, der an die Austrittsöffnung anschließt. Zwischen der Austrittsöffnung und dem Durchflusseinstellschlitz wird das Medium um etwa 90° umgelenkt, so dass dieses Ventil für eine Offenendspinnvorichtung nicht geeignet ist.

Aufgabe der vorliegenden Erfindung ist es daher, eine Offenendspinnvorrichtung vorzuschlagen, bei der das Ansaugen von Fasern und anderen Schmutzpartikeln aus der Umgebung vermieden wird. Weiterhin soll eine Offenendspinnvorrichtung vorgeschlagen werden, welche eine komfortable Regulierung des Zuluftstromes ermöglicht.

Die Aufgabe wird gelöst mit den Merkmalen der unabhängigen Ansprüche. Bei einer Offenendspinnvorrichtung mit einer in einem Auflösewalzengehäuse umlaufenden Auflösewalze weist das Auflösewalzengehäuse eine erste, eine X-Richtung des Auflösewalzengehäuses definierende Seitenwand auf, in welcher eine an Umgebungsluft angeschlossene Schmutzabscheideöffnung angeordnet ist, welche einen ersten Zuluftstrom ermöglicht. Das Auflösewalzengehäuse weist weiterhin eine an Umgebungsluft angeschlossene Ansaugöffnung auf, welche einen zweiten Zuluftstrom ermöglicht. Die Ansaugöffnung ist mit einem im Inneren des Auflösewalzengehäuses mündenden Bypasskanal verbunden. Bevorzugt ist dabei die Mündung des Bypasskanals in Drehrichtung der Auflösewalze der Schmutzabscheideöffnung nachgeordnet und die Zuluftströme sind vor ihrem Eintritt in das Auflösewalzengehäuse voneinander getrennt. Weiterhin ist es bei der Offenendspinnvorrichtung vorteilhaft, wenn der zweite Zuluftstrom mittels eines Drehventils regulierbar ist.

Es wird vorgeschlagen, dass das Drehventil im Wesentlichen zylinderförmig ausgebildet ist und in seiner Umfangsfläche eine Eintrittsöffnung aufweist, deren Breite sich in Umfangsrichtung des Drehventils erweitert und/oder verjüngt und dass der zweite Zuluftstrom mittels des Drehventils umlenkfrei regulierbar ist. Mittels einer derartigen, sich in Umfangsrichtung erweiternden oder verjüngenden Eintrittsöffnung kann der Zuluftstrom in den Bypasskanal in feinfühliger Weise reguliert werden, da hierdurch ein relativ großer Winkelbereich der Umfangsfläche für die Regulierung des Zuluftstroms genutzt werden kann. Es ist somit eine besonders gute Anpassung an verschiedene Materialien möglich, wobei durch die Form der Eintrittsöffnung weitere Möglichkeiten bestehen, den Zuluftstrom zu regulieren.

Nach einer anderen Ausführung wird vorgeschlagen, dass die Ansaugöffnung in einer weiteren Seitenwand oder in einer äußeren Umfangswand des Auflösewalzengehäuses derart angeordnet ist, dass der zweite Zuluftstrom zumindest eine Strömungskomponente in einer senkrecht zur X-Richtung orientierten Y-Richtung aufweist oder vollständig in Y-Richtung orientiert ist, wobei bei in die Spinnmaschine eingebauter Offenendspinnvorrichtung der zweite Zuluftstrom von oben oder zumindest von seitlich-oben angesaugt wird. Durch diese Anordnung wird erreicht, dass die Ansaugöffnung sowohl von einem unterhalb der Schmutzabscheideöffnung angeordneten Schmutztransportband als auch von Faserflug von benachbarten Spinnstellen räumlich abgetrennt ist. Das Einsaugen von Verschmutzungen aus der Umgebung kann hierdurch nahezu vollständig vermieden werden.

Dennoch kann in vorteilhafter Weise der Bypasskanal vergleichsweise lang ausgeführt werden, so dass sich eine laminare Luftströmung ausbilden kann, welche zu einem vorteilhaften, gleichmäßigen Fasertransport führt.

Vorzugsweise ist die weitere, die Ansaugöffnung enthaltende Seitenwand in X-Richtung orientiert oder weist einen Winkel von weniger als 50°, vorzugsweise weniger als 45°, zur X-Richtung auf. Die erste, in X-Richtung orientierte Seitenwand ist somit bei in der Spinnmaschine montierter Spinnvorrichtung horizontal und die weitere Seitenwand ist ebenfalls horizontal oder mit einer Neigung gegenüber der Horizontalen ausgerichtet.

Im Falle eines zumindest teilweise zylindrisch ausgeführten Auflösewalzengehäuses ist vorzugsweise die Ansaugöffnung in einem der Schmutzabscheideöffnung abgewandten, insbesondere gegenüberliegenden, Bereich einer äußeren Umfangswand des Auflösewalzengehäuses angeordnet. Entsprechend ist bei in die Spinnmaschine montierter Offenendspinnvorrichtung die Ansaugöffnung in einem oberen Bereich des Auflösewalzengehäuses angeordnet.

Nach einer vorteilhaften Weiterbildung ist dabei unterhalb der Ansaugöffnung, insbesondere an der ersten Seitenwand des Auflösewalzengehäuses oder in einem der Schmutzabscheideöffnung zugewandten, insbesondere neben der Schmutzabscheideöffnung liegenden, Bereich der äußeren Umfangswand des Auflösewalzengehäuses, eine Abschirmfläche für ein Schmutztransportband angeordnet. Das Einsaugen von Verschmutzungen von dem Schmutztransportband kann hierdurch auch dann vermieden werden, wenn die obere Seitenwand oder der obere Bereich der Umfangswand sich vergleichsweise nahe an dem Schmutztransportband befindet.

Vorteilhaft bei einer Offenendspinnvorrichtung mit einem Drehventil ist es, wenn die Eintrittsöffnung dreicks- oder trapez- oder parabelförmig ausgebildet ist. Hierdurch kann durch Verdrehen des Ventils innerhalb des Bypasskanals der wirksame Querschnitt des Bypasskanals sehr fein entsprechend der Verjüngung bzw. Erweiterung der Eintrittsöffnung eingestellt werden. Zugleich kann dabei erreicht werden, dass der Luftstrom gleichmäßig über die gesamte Breite der Auflösewalze verteilt oder aber zumindest mittig auf die Garnitur der Auflösewalze trifft, was einen gleichmäßigen Fasertransport durch das Auflösewalzengehäuse begünstigt. Aufgrund der Rückwirkung des Zuluftstroms kann dabei auch eine gleichmäßigere Schmutzabscheidung erreicht werden und eine Verflugung des Auflösewalzengehäuses insbesondere im Bereich des Fasereintritts vermieden werden.

Bevorzugt ist die Eintrittsöffnung dabei symmetrisch ausgebildet.

Nach einer anderen Ausführung der Offenendspinnvorrichtung ist die Eintrittsöffnung hingegen asymmetrisch ausgebildet. Hierdurch kann der Zuluftstrom gezielt auf einen bestimmten Bereich der Auflösewalze gerichtet werden. So ist es beispielsweise möglich, den Zuluftstrom gezielt auf den hinteren, der Frontwand des Auflösewalzengehäuses abgewandten Bereich der Auflösewalze zu richten. Mittels einer asymmetrischen Eintrittsöffnung kann somit auch besonderen Gegebenheiten bzw. Strömungsverhältnissen innerhalb der Offenendspinnvorrichtung Rechnung getragen werden.

Vorteilhaft ist es weiterhin, wenn der zweite Zuluftstrom über einen gesamten Öffnungsbereich des Drehventils umlenkfrei regulierbar ist. Anders ausgedrückt weist das Drehventil innerhalb seines Öffnungsbereiches keine Umlenkungen für den Zuluftstrom auf. Verflugungen innerhalb des Drehventils können hierdurch über seinen gesamten Öffnungsbereich vermieden werden.

Vorteilhaft ist es zudem, wenn das Drehventil als Einsatz ausgebildet ist und in den Bypasskanal eingesetzt ist. Hierdurch ist ein leichter Austausch des Drehventils und damit eine Anpassung an verschiedene Spinnmaterialien oder Offenendspinnvorrichtungen möglich. Besonders vorteilhaft ist es, wenn das Drehventil mit seiner Hauptachse parallel zu einer Drehachse der Auflösewalze in den Bypasskanal eingesetzt ist. Unter der Hauptachse des Drehventils wird dabei die Zylinderachse eines im Wesentlichen zylinderförmigen Drehventils verstanden. Durch diese Anordnung kann in Verbindung mit der an einer Seitenwand oder an einer oberen Seitenwand des Auflösewalzengehäuses angeordneten Ansaugöffnung eine umlenkfreie Durchströmung des Drehventils im Wesentlichen quer zu seiner Hauptachse erreicht werden.

Denkbar wäre es allerdings auch, ein solches Drehventil mit seiner Hauptachse quer oder in einem Winkel zur Drehachse der Auflösewalze einzusetzen. Die Ansaugöffnung der Offenendspinnvorrichtung wäre dabei wiederum an der Frontwand der Offenendspinnvorrichtung angeordnet. Das Drehventil bietet auch bei dieser Anordnung den Vorteil einer feinen Regulierung des Zuluftstromes und einer Verminderung der Verfügung.

Besonders vorteilhaft ist es, wenn das Drehventil an die Ansaugöffnung angrenzend in den Bypasskanal eingesetzt ist. Hierdurch wird der Querschnitt des Bypasskanals unmittelbar im Bereich der Ansaugöffnung reguliert bzw. ist hierdurch der wirksame Querschnitt der Ansaugöffnung einstellbar. Vorteilhaft ist es daher auch, wenn das Drehventil unmittelbar an die Ansaugöffnung angrenzend in den Bypasskanal eingesetzt ist.

Weiterhin ist es vorteilhaft, wenn eine maximale Breite der Eintrittsöffnung des Drehventils zumindest einer Breite der Ansaugöffnung des Auflösewalzengehäuses entspricht. Eine Verflugung des Drehventils kann hierdurch weiter reduziert werden.

Vorzugsweise entspricht dabei die Breite der Ansaugöffnung auch einer Breite der Garnitur der Auflösewalze, was wiederum das gleichmäßige Auftreffen des Luftstromes über die gesamte Breite der Garnitur unterstützt.

Weiterhin ist es vorteilhaft, wenn das Drehventil und/oder der Bypasskanal eine Verrastung oder einen Anschlag zumindest für eine Offenstellung und eine Geschlossenstellung des Drehventils aufweist. Durch einen solchen Anschlag oder eine solche Verrastung ist bei der Bedienung des Drehventils klar erkennbar, in welcher Stellung sich das Drehventil befindet. Natürlich können aber auch Verrastungen für eine oder mehrere Zwischenstellungen vorgesehen sein. Eine stufenlose Verstellung des Drehventils ohne explizite Zwischenstellungen und gegebenenfalls auch ohne Verrastung oder Anschlag in den Endpositionen ist aber ebenfalls denkbar.

Weiterhin ist es vorteilhaft, wenn das Drehventil und/oder das Auflösewalzengehäuse eine Anzeige zumindest für die Offenstellung und die Geschlossenstellung des Drehventils aufweist. Hierdurch ist die Stellung des Drehventils auch optisch leicht erkennbar.

Daneben ist es vorteilhaft, wenn der Bypasskanal, insbesondere eine Höhe des Bypasskanals, sich von der Ansaugöffnung bis zu einer Mündung des Bypasskanals im Auflösewalzengehäuse verjüngt. Eine solche Ausführung trägt durch die Beeinflussung der Strömungsverhältnisse zur Vermeidung unerwünschter Faserabsetzungen bei.

Nach einer anderen Weiterbildung ist es vorteilhaft, wenn der Bypasskanal von der Ansaugöffnung bis zur Mündung einen geschwungenen Verlauf aufweist. Durch einen solchen geschwungenen Verlauf ist es möglich, den Zuluftstrom gezielt in einem bestimmten, erwünschten Winkel auf die Garnitur der Auflösewalze zu führen.

Vorteilhaft für den Fasertransport ist es auch, wenn der Bypasskanal im Bereich der Mündung in einem spitzen Winkel, insbesondere in einem spitzen Winkel von 10 bis 50°, vorzugsweise von 15° bis 40° und besonders bevorzugt von 20° bis 30°, in das Auflösewalzengehäuse mündet. Der Winkel bezieht sich dabei auf den Winkel, den eine gegebenenfalls auch gekrümmt verlaufende Mittelachse des Zuluftkanals mit einer Tangentialen an die Auflösewalze im Bereich der Mündung einschließt.

Ebenso ist es für einen gleichmäßigen Fasertransport und ein Auftreffen des Luftstromes über die gesamte Breite der Garnitur vorteilhaft, wenn der Bypasskanal von der Ansaugöffnung bis zu der Mündung eine im wesentlichen konstante Breite aufweist.

Nicht im Rahmen der Erfindung inbegriffen, wird weiterhin ein Drehventil, das im Wesentlichen zylinderförmig ausgebildet ist und an seiner Umfangsfläche eine Eintrittsöffnung aufweist, vorgeschlagen. Das Drehventil ist gemäß der vorangegangenen und/oder der nachfolgenden Beschreibung ausgebildet, wobei die genannten Merkmale einzeln oder in beliebiger Kombination vorhanden sein können.

Weitere Vorteile der Erfindung sind in den nachfolgenden Ausführungsbeispielen beschrieben. Es zeigen:
- **Figur 1**: eine schematische, geschnittene Übersichtsdarstellung einer Offenendspinnvorrichtung mit einem Auflösewalzengehäuse,
- **Figur 2**: eine schematische Frontansicht einer Offenendspinnvorrichtung mit einem teilzylindrischen Auflösewalzengehäuse,
- **Figur 3**: eine andere Ausführung einer Offenendspinnvorrichtung mit einem teilzylindrischen Auflösewalzengehäuse,
- **Figuren 4-6**: eine Detailansicht eines Drehventils mit verschiedenartig ausgeführten Eintrittsöffnungen,
- **Figur 7**: eine Detaildarstellung eines Drehventils mit Verrastung,
- **Figur 8**: eine abgebrochen dargestellte Ansicht einer Offenendspinnvorrichtung mit einer Anzeige für das Drehventil, sowie
- **Figur 9**: eine schematische Darstellung einer Offenendspinnvorrichtung mit Anschlägen.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen Merkmale.

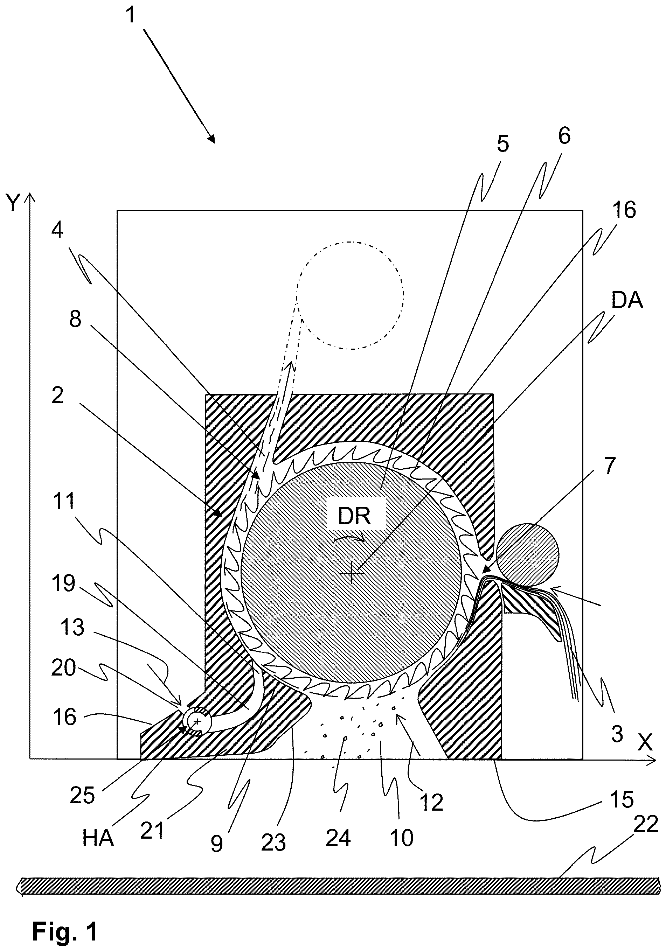

Figur 1 zeigt eine schematische Übersichtsdarstellung einer Offenendspinnvorrichtung 1, die hier in geschnittener Darstellung das Auflösewalzengehäuse 2 aufweist, in welchem eine Auflösewalze 5 um eine Drehachse DA drehbar gelagert ist. Im Auflösewalzengehäuse 2 wird in an sich bekannter Weise über eine hier nicht bezeichnete Zuführvorrichtung ein Fasermaterial 3 an einer Faserzuführstelle 7 zugeführt. Die Auflösewalze 5 ist mit einer Garnitur 6 versehen, mittels welcher Fasern 4 aus dem Fasermaterial 3 ausgekämmt werden und in Umfangsrichtung der Auflösewalze 5 bis zu einer Faserabgabestelle 8 transportiert werden. An der Faserabgabestelle 8 werden die Fasern 4 in einen hier nicht bezeichneten Speisekanal geleitet, mittels welchem sie einem hier strichpunktiert dargestellten und nicht bezeichneten Spinnrotor zugeführt werden. Der Spinnrotor läuft in einem Rotorgehäuse um, da mit Unterdruck beaufschlagt ist, so dass die Fasern 4 mittels eines Luftstromes von dem Speisekanal bis in den Rotor transportiert werden können.

Um in dem Auflösewalzengehäuse 2 die für den Fasertransport erforderliche Luftströmung auszubilden, weist das Auflösewalzengehäuse 2 zwischen der Faserzuführstelle 7 und der in Drehrichtung DR der Auflösewalze 5 der Faserzuführstelle 7 nachgeordneten Faserabgabestelle 8 zwei Öffnungen auf.

An einer ersten Seitenwand 15 des Auflösewalzengehäuses 2 ist eine Schmutzabscheideöffnung 10 angeordnet, über welche ein erster Zuluftstrom 12 zugeführt werden kann. Die erste Seitenwand 15 definiert eine X-Richtung des Auflösewalzengehäuses 2. Die Schmutzabscheideöffnung 10 steht mit Umgebungsluft in Verbindung. Die durch die Garnitur 6 der Auflösewalze 5 aus dem Fasermaterial 3 ausgekämmten Schmutzpartikel 24 werden an der Schmutzabscheideöffnung 10 durch die Fliehkraft aus dem Auflösewalzengehäuse 2 herausgeschleudert und fallen auf ein unterhalb der Offenendspinnvorrichtung 1 angeordnetes Schmutztransportband 22, mittels welchem sie gesammelt und entsorgt werden können. Im Fasermaterial 3 enthaltene Verunreinigungen können somit nicht mehr in den Spinnprozess gelangen und die Qualität des erzeugten Garns beeinträchtigen.

In Drehrichtung DR der Auflösewalze 5 der Schmutzabscheideöffnung 10 nachgeordnet befindet sich eine Mündung 11 eines Bypasskanals 19, die an einer inneren Umfangswand 9 des Auflösewalzengehäuses 2 angeordnet ist. Die Mündung 11 ist über den Bypasskanal 19 mit einer Ansaugöffnung 20 des Auflösewalzengehäuses 2 verbunden. Durch den Bypasskanal 19 wird dem Auflösewalzengehäuse 2 ein zweiter Zuluftstrom 13 zugeführt, welcher vorzugsweise vor seinem Eintritt in das Auflösewalzengehäuse 2 vollkommen getrennt von dem ersten Zuluftstrom 12 ist.

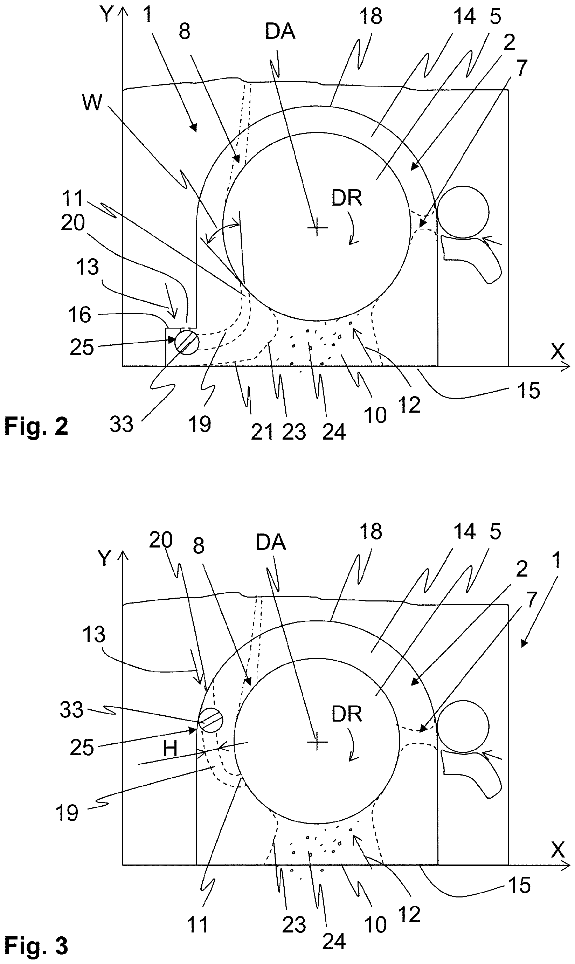

Die Ansaugöffnung 20 befindet sich in einer weiteren Seitenwand 16 des Auflösewalzengehäuses 2, die entweder in X-Richtung orientiert ist oder, wie hier gezeigt, einen Winkel von weniger als 50°, vorzugsweise weniger als 45°, zur X-Richtung aufweist. Der zweite Zuluftstrom 13 kann dadurch so angesaugt werden, dass er in Y-Richtung orientiert ist oder zumindest eine Strömungskomponente in Y-Richtung aufweist. Hierdurch kann in vorteilhafter Weise sowohl das Ansaugen von Fasern 4 insbesondere aus einem vorbeilaufenden Fasermaterial 3 einer benachbarten Offenendspinnvorrichtung als auch von Schmutzpartikeln 24 von dem Schmutztransportband 22 vermieden werden. Durch die Anordnung der Ansaugöffnung 20 in der weiteren Seitenwand 16 ist die Ansaugöffnung 20 ausreichend von einem benachbarten Fasermaterial 3 sowie dem Schmutztransportband 22 abgetrennt. Das Auflösewalzengehäuse 2 weist weiterhin noch eine Frontwand 14 (siehe Figuren 2 und 3) auf, die jedoch in Figur 1 nicht ersichtlich ist. Das Auflösewalzengehäuse 2 der Figur 1 besitzt eine im Wesentlichen eckige Grundform.

Das Auflösewalzengehäuse 2 kann natürlich auch anders ausgestaltet sein. So zeigt Figur 2 ein Auflösewalzengehäuse 2, welches eine im Wesentlichen zylindrische Grundform besitzt und neben der ersten Seitenwand 15 und einer weiteren Seitenwand 16 eine äußere Umfangswand 18 aufweist. Die Ansaugöffnung 20 ist bei dieser Ausführung wiederum in der weiteren Seitenwand 16 angeordnet, die bei diesem Auflösewalzengehäuse 2 in X-Richtung (parallel zur ersten Seitenwand) und somit horizontal ausgerichtet ist.

Eine weitere Ausführungsform eines Auflösewalzengehäuses 2 ist in Figur 3 gezeigt. Auch dieses Auflösewalzengehäuse 2 ist zumindest teilweise zylindrisch ausgebildet und weist eine äußere Umfangswand 18 auf. Die Ansaugöffnung 20 des Bypasskanals 19 ist bei dieser Ausführung in einem der Schmutzabscheideöffnung 10 bzw. der ersten, unteren Seitenwand 15 abgewandten Bereich der äußeren Umfangswand 18 angeordnet. Somit befindet sich die Ansaugöffnung 20 bei in die Spinnmaschine montierter Offenendspinnvorrichtung 1 in einem oberen Bereich, so dass entsprechend wieder der zweite Zuluftstrom 13 von oben angesaugt wird, also zumindest eine Strömungskomponente in Y-Richtung aufweist. Auch bei dieser Anordnung wird eine gute Abtrennung der Ansaugöffnung 20 von einem Fasermaterial 3 einer Nachbarspinnstelle erreicht.

Bezüglich des Auflösewalzengehäuses 2 sind zahlreiche Abwandlungen möglich. Insbesondere kann das Auflösewalzengehäuse 2 auch mit einem Deckelelement zum Verschließen des Rotorgehäuses kombiniert sein. In jedem Falle ist es dabei ausschlaggebend, dass die Ansaugöffnung 20 derart in einer weiteren Seitenwand 16 oder in einer äußeren Umfangswand 18 angeordnet ist, dass der Zuluftstrom eine Strömungskomponente in Y-Richtung aufweist oder in Y-Richtung orientiert ist und dadurch insbesondere dem benachbarten Fasermaterial 3 abgewandt ist.

Um das Ansaugen von Schmutzpartikeln 24 von der Schmutzabscheideöffnung 10 bzw. von dem Schmutztransportband 22 zu vermeiden, ist bei den Ausführungen der Figuren 1 und 2 weiterhin noch eine Abschirmfläche 21 unterhalb der Ansaugöffnung 20 vorgesehen. Vorliegend ist die Abschirmfläche 21 jeweils an der ersten Seitenwand 15 des Auflösewalzengehäuses 2 anschließend an Schmutzabscheideöffnung 10, insbesondere an eine Hinterkante 23 der Schmutzabscheideöffnung 10, angeordnet.

In den Figuren 1 und 2 nimmt der Bypasskanal 19 weiterhin einen geschwungenen Verlauf von der Ansaugöffnung 20 bis zur Mündung 11 ein. Der Bypasskanal 19 ist dabei in einem spitzen Winkel W (siehe Figur 2) auf die Garnitur 6 der Auflösewalze 5 geführt, wodurch eine besonders vorteilhafte Strömung innerhalb des Auflösewalzengehäuses 2 erreicht wird.

Vorteilhaft ist es bei solchen Offenendspinnvorrichtungen 1, wenn der zweite Zuluftstrom 13 mittels eines Drehventils 25, welches in Figur 1 in einer Schnittdarstellung und in den Figuren 2 und 3 in einer Ansichtsdarstellung gezeigt ist, reguliert werden kann. Das Drehventil ist dabei mit seiner Hauptachse HA (s. Fig. 1 und 4 - 7) parallel zur Auflösewalze 5 in das Auflösewalzengehäuse 2 eingesetzt und vorzugsweise entnehmbar bzw. austauschbar. Das Drehventil 25 ist dabei eine Frontseite der Offenendspinnvorrichtung 1, vorzugsweise in die Frontwand 14 des Auflösewalzengehäuses 2, eingesetzt und kann mittels eines Drehgriffs 33 (siehe Figuren 2 und 3) betätigt werden. Das Drehventil 25 ist dabei so in das Auflösewalzengehäuse 2 eingesetzt, dass es den wirksamen Querschnitt des Bypasskanals 19 verändern kann und hierdurch den Zuluftstrom 13 regulieren kann. Das Drehventil 25 weist dabei eine Eintrittsöffnung 27 sowie eine Austrittsöffnung 32 auf, welche aus Gründen der Übersichtlichkeit in den Figuren 1 - 3 nicht gezeigt sind und einen Durchtrittskanal des Drehventils 25 definieren.

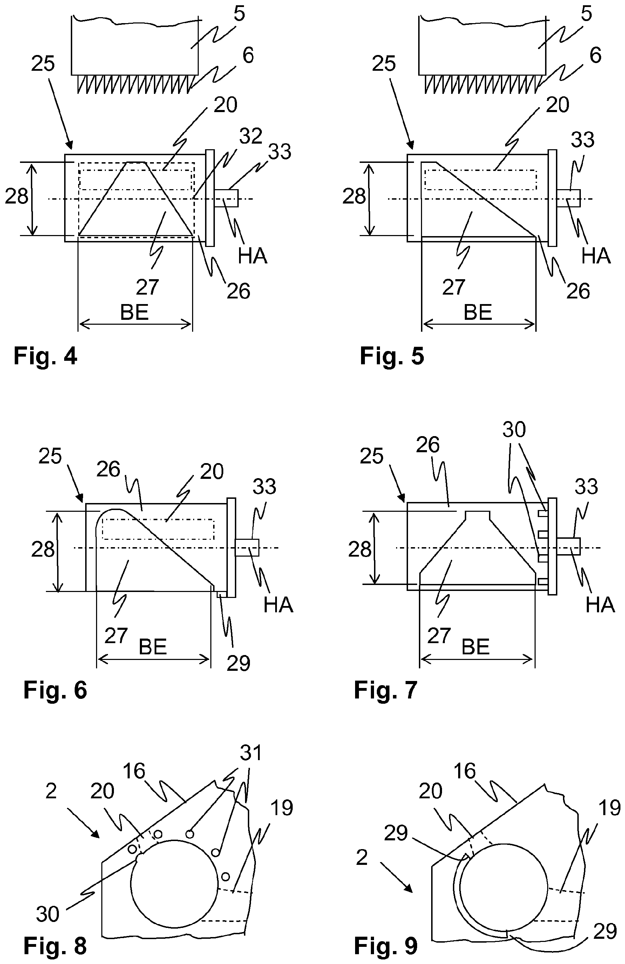

Wie der Figur 1 entnehmbar, ist dabei das Drehventil 25 bzw. der Durchtrittskanal des Drehventils 25 zumindest über einen breiten Bereich seines Öffnungsbereichs 28 (siehe Figuren 4-9), vorzugsweise über seinen gesamten Öffnungsbereich 28, ohne Umlenkungen ausgeführt. Faserabsetzungen in dem Drehventil 25 und dem Bypasskanal 19 werden hierdurch reduziert.

Figur 4 zeigt eine erste Ausführung eines Drehventils 25, welches an seiner Umfangsfläche 26 mit einer trapezförmigen Eintrittsöffnung 27 versehen ist. Im gestrichelten Linien und somit verdeckt dargestellt ist weiterhin noch die Austrittsöffnung 32, die in den folgenden Figuren aus Gründen der Übersichtlichkeit nicht mehr gezeigt ist. Schematisch ist mit strichpunktierten Linien weiterhin die Ansaugöffnung 20 dargestellt, welche bei in das Auflösewalzengehäuse 2 eingesetztem Drehventil 25 mit der Eintrittsöffnung 27 zusammenwirkt. Schließlich ist noch schematisch die Auflösewalze 5 mit ihrer Garnitur 6 gezeigt. Die Ansaugöffnung 20 ist vorliegend schlitzförmig ausgebildet. Das Drehventil 25 befindet sich in der vorliegend gezeigten Stellung in Bezug auf die Ansaugöffnung 20 in einer Stellung, in welcher es nur zu einem kleinen Teil geöffnet ist und somit nur einen reduzierten, zweiten Zuluftstrom 13 durch die Ansaugöffnung 20 eintreten lässt. Durch Verdrehen des Drehventils 25, wie durch den Pfeil symbolisiert, kann ein größerer Querschnitt der Ansaugöffnung 20 freigegeben werden, da sich die Eintrittsöffnung 27 in Umfangsrichtung erweitert.

Figur 5 zeigt eine andere Ausführung eines Drehventils 25, in welchem die Eintrittsöffnung 27 asymmetrisch ausgebildet ist. Dies ist beispielsweise mit einem asymmetrischen Trapez oder auch einer dreieckförmigen Eintrittsöffnung 27 möglich. Während bei der in Figur 4 gezeigten Ausführung der Zuluftstrom 13 stets in der Mitte der Garnitur 6 der Auflösewalze 5 auftrifft, kann mittels einer solchen asymmetrischen Ausführung beispielsweise dafür gesorgt werden, dass der zweite Zuluftstrom 13 eher auf den hinteren, der Frontwand 14 des Auflösewalzengehäuses 2 abgewandten Bereich der Garnitur 6 gerichtet wird.

Figur 6 zeigt eine weitere Ausführung eines Drehventils 25 mit einer asymmetrischen Eintrittsöffnung 27. Die Eintrittsöffnung 27 ist vorliegend parabelförmig ausgeführt.

Wie den Figuren 4 - 6 entnehmbar, ist die maximale Breite BE der Eintrittsöffnung 27 dabei vorzugsweise wenigstens so breit wie die Breite der Ansaugöffnung 20. Weiterhin entspricht die Breite der Ansaugöffnung 20 vorzugsweise auch der Breite der Garnitur 6, wie in den Figuren 4 und 5 angedeutet.

Auch eine Breite des Bypasskanals 19, welche vorliegend nicht ersichtlich ist, entspricht dabei vorzugsweise im Wesentlichen der Breite der Garnitur 6 bzw. der Auflösewalze 5. Demgegenüber kann eine Höhe H des Bypasskanals 19 auch von der Ansaugöffnung 20 bis zur Mündung 11 sich verjüngend ausgeführt sein, wie es in den Figuren 1-3 dargestellt ist. Die nicht dargestellte Breite des Bypasskanals 19 erstreckt sich somit senkrecht zu der den Figuren 1-3 ersichtlichen Höhe H des Bypasskanals 19.

Das Drehventil der Figur 6 weist weiterhin noch einen Anschlag 29 auf. Der Anschlag 29 korrespondiert dabei beim Verdrehen des Drehventils 25 mit Anschlägen 29 des Auflösewalzengehäuses 2 (s. Figur 9) bzw. wirkt mit diesen zusammen.

Figur 9 zeigt eine abgebrochen dargestellte Ansicht eines Auflösewalzengehäuses 2. Dabei ist ein erster Anschlag 29, vorliegend in 6-Uhr-Stellung gezeigt, für die Geschlossenstellung des Drehventils 25 vorgesehen, in welcher die Ansaugöffnung 20 durch die die Eintrittsöffnung 27 umgebende Umfangsfläche 26 des Drehventils 25 bedeckt ist. Ein zweiter, vorliegend in 11-Uhr-Stellung angeordneter Anschlag 29 des Auflösewalzengehäuses 2 ist für die Offenstellung bzw. maximale Öffnungsstellung des Drehventils 25 vorgesehen, in welcher die Eintrittsöffnung 27 des Drehventils 25 die Ansaugöffnung 20 des Auflösewalzengehäuses 2 vollständig freigibt. Somit kann der Bediener beim Verdrehen des Drehventil den zweiten Zuluftstrom 13 stets reproduzierbar einstellen.

Figur 7 zeigt hingegen eine andere Ausführung eines Drehventils 25, welches Verrastungen 30, beispielsweise federnde Rasthaken, aufweist. Nach vorliegender Ausführung sind dabei Verrastungen 30 nicht nur für die Offenstellung und die Geschlossenstellung des Drehventils vorgesehen, sondern auch für vorliegend zwei Zwischenstellungen. Die Verrastungen 30 des Drehventils 25 wirken dabei mit einer Verrastung 30 des Auflösewalzengehäuses 2 (s. Figur 8) zusammen. Weiterhin ist in Figur 7 eine weitere Form einer Eintrittsöffnung 27 in Form eines abgewandelten Trapezes gezeigt, die natürlich auch unabhängig von etwaigen Anschlägen 29 oder Verrastungen 30 zum Einsatz kommen kann.

Figur 8 zeigt ebenfalls eine abgebrochen dargestellte Ansicht eines Auflösewalzengehäuses 2. Ebenso wie in der bereits beschriebenen Figur 9 ist lediglich das Auflösewalzengehäuse 2 ohne das Drehventil 25 gezeigt. Die Verrastung 30 des Auflösewalzengehäuses 2 ist dabei als Vertiefung in der für das Drehventil vorgesehenen Öffnung des Auflösewalzengehäuse 2 ausgebildet, so dass die Verrastungen 30 des Drehventils 25 der Figur 7 beim Verdrehen des Drehventils 25 nacheinander in die Verrastung 30 des Auflösewalzengehäuses 2 einrasten können.

Weiterhin sind in der Figur 8 Anzeigen 31 für verschiedene Stellungen des Drehventils 25 gezeigt. Vorliegend ist jeweils eine Anzeige 31 für die Offenstellung (im Bild ganz rechts), die Geschlossenstellung (im Bild ganz links) sowie für zwei Zwischenstellungen gezeigt. Es liegt auf der Hand, dass natürlich auch weniger oder mehr Zwischenstellungen angezeigt werden können. Die Anzeigen 31 oder auch nur eine Anzeige 31 können auch unabhängig von eventuellen Verrastungen 30 und Anschlägen 29 eingesetzt werden. Natürlich ist es abweichend von den beschriebenen Ausführungen auch möglich, das Drehventil 25 stufenlos zu verstellen. Ebenso sind bezüglich der Ausführung der Verrastungen 30 sowie der Anschläge 29 ebenso wie der Eintrittsöffnung 27 und der Anzeige 31 zahlreiche Abwandlungen möglich. Die gezeigten Ausführungen sind lediglich exemplarisch zu verstehen.

Die vorliegende Erfindung ist nicht auf die dargestellten und beschriebenen Ausführungsbeispiele beschränkt. Weitere Abwandlungen wie eine Kombination der Merkmale, auch wenn diese in unterschiedlichen Ausführungsbeispielen dargestellt und beschrieben sind, sind im Rahmen der Patentansprüche ebenso möglich.

### Bezugszeichenliste

- 1: Offenendspinnvorrichtung
- 2: Auflösewalzengehäuse
- 3: Fasermaterial
- 4: Fasern
- 5: Auflösewalze
- 6: Garnitur
- 7: Faserzuführstelle
- 8: Faserabgabestelle
- 9: innere Umfangswand
- 10: Schmutzabscheideöffnung
- 11: Mündung
- 12: erster Zuluftstrom
- 13: zweiter Zuluftstrom
- 14: Frontwand
- 15: erste Seitenwand
- 16: weitere Seitenwand
- 18: äußere Umfangswand
- 19: Bypasskanal
- 20: Ansaugöffnung
- 21: Abschirmfläche
- 22: Schmutztransportband
- 23: Hinterkante
- 24: Schmutzpartikel
- 25: Drehventil
- 26: Umfangsfläche
- 27: Eintrittsöffnung
- 28: Öffnungsbereich
- 29: Anschlag
- 30: Verrastung (als federnde Rasthaken)
- 31: Anzeige
- 32: Austrittsöffnung
- 33: Drehgriff

- BE: Breite der Eintrittsöffnung
- DR: Drehrichtung der Auflösewalze
- DA: Drehachse der Auflösewalze
- HA: Hauptachse des Drehventils
- H: Höhe des Bypasskanals
- W: Winkel
- X: X-Richtung
- Y: Y-Richtung

## Patentansprüche

1. Offenendspinnvorrichtung (1) mit einer in einem Auflösewalzengehäuse (2) umlaufenden Auflösewalze (5), wobei das Auflösewalzengehäuse (2) eine erste, eine X-Richtung des Auflösewalzengehäuses (2) definierende Seitenwand (15) aufweist, in welcher eine an Umgebungsluft angeschlossene Schmutzabscheideöffnung (10) angeordnet ist, welche einen ersten Zuluftstrom (12) ermöglicht, wobei das Auflösewalzengehäuse (2) eine an Umgebungsluft angeschlossene Ansaugöffnung (20) aufweist, welche einen zweiten Zuluftstrom (13) ermöglicht und welche mit einem im Inneren des Auflösewalzengehäuses (2) mündenden Bypasskanal (19) verbunden ist, wobei der zweite Zuluftstrom (13) mittels eines Drehventils (25) regulierbar ist, wobei das Drehventil (25) im Wesentlichen zylinderförmig ausgebildet ist und an seiner Umfangsfläche (26) eine Eintrittsöffnung (27) aufweist, **dadurch gekennzeichnet, dass** die Breite (BE) der Eintrittsöffnung (27) sich in Umfangsrichtung des Drehventils (25) erweitert und/oder verjüngt und dass der zweite Zuluftstrom (13) mittels des Drehventils (25) umlenkfrei regulierbar ist.

2. Offenendspinnvorrichtung (1) mit einer in einem Auflösewalzengehäuse (2) umlaufenden Auflösewalze (5), wobei das Auflösewalzengehäuse (2) eine erste, eine X-Richtung des Auflösewalzengehäuses (2) definierende Seitenwand (15) aufweist, in welcher eine an Umgebungsluft angeschlossene Schmutzabscheideöffnung (10) angeordnet ist, welche einen ersten Zuluftstrom (12) ermöglicht, wobei das Auflösewalzengehäuse (2) eine an Umgebungsluft angeschlossene Ansaugöffnung (20) aufweist, welche einen zweiten Zuluftstrom (13) ermöglicht und welche mit einem im Inneren des Auflösewalzengehäuses (2) mündenden Bypasskanal (19) verbunden ist, wobei die Ansaugöffnung (20) in einer weiteren Seitenwand (16) oder in einer äußeren Umfangswand (18) des Auflösewalzengehäuses (2) angeordnet ist, insbesondere nach dem vorhergehenden Anspruch, **dadurch gekennzeichnet, dass** die Ansaugöffnung (20) derart angeordnet ist, dass der zweite Zuluftstrom (13) zumindest eine Strömungskomponente in einer senkrecht zur X-Richtung orientierten Y-Richtung aufweist oder vollständig in Y-Richtung orientiert ist, sodass bei in eine Spinnmaschine montierter Offenendspinnvorrichtung (1) der zweite Zuluftstrom (13) von oben oder von seitlich-oben angesaugt wird.

3. Offenendspinnvorrichtung (1) nach dem vorherigen Anspruch,
**dadurch gekennzeichnet, dass** die weitere, die Ansaugöffnung (20) enthaltende Seitenwand (16) in X-Richtung orientiert ist oder einen Winkel von weniger als 50°, vorzugsweise weniger als 45°, zur X-Richtung aufweist.

4. Offenendspinnvorrichtung (1) nach einem der vorherigen Ansprüche, **dadurch gekennzeichnet, dass** die Ansaugöffnung (20) in einem der Schmutzabscheideöffnung (10) abgewandten, insbesondere gegenüberliegenden, Bereich einer äußeren Umfangswand (18) des Auflösewalzengehäuses (2) angeordnet ist.

5. Offenendspinnvorrichtung (1) nach einem der vorherigen Ansprüche, **dadurch gekennzeichnet, dass** unterhalb der Ansaugöffnung (20), insbesondere an der ersten Seitenwand (15) des Auflösewalzengehäuses (2) oder in einem der Schmutzabscheideöffnung (10) zugewandten, insbesondere neben der Schmutzabscheideöffnung (10) liegenden, Bereich der äußeren Umfangswand (18) des Auflösewalzengehäuses (2), eine Abschirmfläche (21) für ein Schmutztransportband (22) angeordnet ist.

6. Offenendspinnvorrichtung (1) nach Anspruch 1, **dadurch gekennzeichnet, dass** die Eintrittsöffnung (27) des Drehventils (25) dreiecks- oder trapez- oder parabelförmig ausgebildet ist und/oder dass die Eintrittsöffnung (27) asymmetrisch ausgebildet ist.

7. Offenendspinnvorrichtung (1) nach einem der Ansprüche 1 oder 6,
**dadurch gekennzeichnet, dass** der zweite Zuluftstrom (13) mittels des Drehventils (25) über einen gesamten Öffnungsbereich (28) des Drehventils (25) umlenkfrei regulierbar ist.

8. Offenendspinnvorrichtung (1) nach einem der Ansprüche 1, 6 oder 7, **dadurch gekennzeichnet, dass** das Drehventil (25) in den Bypasskanal (19) eingesetzt ist, insbesondere mit seiner Hauptachse (HA) parallel zu einer Drehachse (DA) der Auflösewalze (5) in den Bypasskanal (19) eingesetzt ist.

9. Offenendspinnvorrichtung nach einem der Ansprüche 1 oder 6 - 8,
**dadurch gekennzeichnet, dass** eine maximale Breite (BE) der Eintrittsöffnung (27) des Drehventils (25) zumindest einer Breite der Ansaugöffnung (20) des Auflösewalzengehäuses (2) entspricht.

10. Offenendspinnvorrichtung (1) nach einem der Ansprüche 1 oder 6 - 9, **dadurch gekennzeichnet, dass** das Drehventil (25) und/oder der Bypasskanal (19) eine Verrastung (30) oder einen Anschlag (29) zumindest für eine Offenstellung und eine Geschlossenstellung des Drehventils (25) aufweist.

11. Offenendspinnvorrichtung (1) nach einem der vorherigen Ansprüche, **dadurch gekennzeichnet, dass** der Bypasskanal (19) in einem spitzen Winkel (W), insbesondere einem Winkel (W) von 10° - 50°, vorzugsweise von 15° bis 40° und besonders bevorzugt von 20°- 30° in das Innere des Auflösewalzengehäuses (2) mündet.

12. Offenendspinnvorrichtung (1) nach einem der vorherigen Ansprüche, **dadurch gekennzeichnet, dass** der Bypasskanal (19) von der Ansaugöffnung (20) bis zu einer Mündung (11) eine im Wesentlichen konstante Breite aufweist.

## Claims

1. An open-end spinning device (1) having an opening roller (5) rotating in an opening roller housing (2), the opening roller housing (2) comprising a first side wall (15) defining an X-direction of the opening roller housing (2) and in which a dirt separator opening (10) connected to the ambient air is disposed and enables a first inlet air flow (12), the opening roller housing (2) comprising an suction opening (20) connected to the ambient air and enabling a second inlet air flow (13) and connected to a bypass channel (19) opening into the interior of the opening roller housing (2), the second inlet air flow (13) being regulated by means of a rotary valve (25), the rotary valve (25) being substantially cylindrical in design and comprising an inlet opening (27) on the peripheral surface (26) thereof, **characterized in that** the width (BE) thereof expanding and/or contracting in the circumferential direction of the rotary valve (25) and the second inlet air flow (13) being regulated by means of the rotary valve (25) without deflection.

2. An open-end spinning device (1) having an opening roller (5) rotating in an opening roller housing (2), the opening roller housing (2) comprising a first side wall (15) defining an X-direction of the opening roller housing (2) and in which a dirt separator opening (10) connected to the ambient air is disposed and enables a first inlet air flow (12), the opening roller housing (2) comprising an suction opening (20) connected to the ambient air and enabling a second inlet air flow (13) and connected to a bypass channel (19) opening into the interior of the opening roller housing (2), the suction opening (20) is disposed in a further side wall (16) or in an outer peripheral wall (18) of the opening roller housing (2), particularly according to the preceding claim, **characterized in that** the suction opening (20) is arranged such that the second inlet air flow (13) comprises at least one flow component in a Y-direction oriented perpendicular to the X-direction or oriented entirely in the Y-direction, so that, in the case on an open-end spinning device (1) mounted within a spinning machine, the second inlet air flow (13) is suctioned in from above or from the side-above..

3. The open-end spinning device (1) according to the preceding claim, **characterized in that** the further side wall (16) comprising the suction opening (20) is oriented in the X-direction or at an angle of less than 50°, preferably less than 45°, to the X-direction.

4. The open-end spinning device (1) according to any one of the preceding claims, **characterized in that** the suction opening (20) is disposed in a region of an outer peripheral wall (18) of the opening roller housing (2) facing away from the dirt separating opening (10), particularly opposite thereto.

5. The open-end spinning device (1) according to any one of the preceding claims, **characterized in that** a shielding surface (21) for a dirt transport belt (22) is disposed below the suction opening (20), particularly at the first side wall (15) of the opening roller housing (2) or in a region of the outer peripheral wall (18) of the opening roller housing (2) facing toward the dirt separating opening (10), particularly disposed adjacent to the dirt separating opening (10).

6. The open-end spinning device (1) according to the claim 1, **characterized in that** the inlet opening (27) of the rotary valve (25) is triangular or trapezoidal or parabolic in shape and/or the inlet opening (27) is asymmetric in design.

7. The open-end spinning device (1) according to any one of the claims 1 or 6, **characterized in that** the second inlet air flow (13) can be regulated by means of the rotary valve (25) without deflection, over an entire opening range (28) of the rotary valve (25).

8. The open-end spinning device (1) according to any one of the claims 1, 6 or 7, **characterized in that** the rotary valve (25) is inserted in the bypass channel (19), particularly inserted in the bypass channel (19) having the main axis (HA) thereof parallel to an axis of rotation (DA) of the opening roller (5).

9. The open-end spinning device according to any one of the claims 1 or 6 to 8, **characterized in that** a maximum width (BE) of the inlet opening (27) of the rotary valve (25) corresponds at least to a width of the suction opening (20) of the opening roller housing (2).

10. The open-end spinning device (1) according to any one of the claims 1 or 6 to 9, **characterized in that** the rotary valve (25) and/or the bypass channel (19) comprises a detent (30) or a stop (29) at least for an open position and a closed position of the rotary valve (25).

11. The open-end spinning device (1) according to any one of the preceding claims, **characterized in that** the bypass channel (19) opens into the interior of the opening roller housing (2) at an acute angle (W), particularly an angle (W) of 10°-50°, preferably from 15° to 40°, and particularly preferably of 20°-30°.

12. The open-end spinning device (1) according to any one of the preceding claims, **characterized in that** the bypass channel (19) comprises a substantially constant width from the suction opening (20) to an orifice (11).

## Revendications

1. Dispositif de filature à fibres libérées (1) avec un cylindre défibreur (5) tournant dans un carter (2) de cylindre défibreur, dans lequel le carter (2) de cylindre défibreur présente une première paroi latérale (15) définissant une direction X du carter (2) de cylindre défibreur, dans laquelle est disposée une ouverture de séparation de salissures (10) raccordée à l'air ambiant, qui permet un premier courant d'air d'alimentation (12), dans lequel le carter (2) de cylindre défibreur présente une ouverture d'aspiration (20) raccordée à l'air ambiant, qui permet un deuxième courant d'air d'alimentation (13) et qui est raccordée à un canal de dérivation (19) débouchant à l'intérieur du carter (2) de cylindre défibreur, dans lequel le deuxième courant d'air d'alimentation (13) pouvant être régulé au moyen d'une soupape rotative (25), dans lequel la soupape rotative (25) est réalisée essentiellement sous forme cylindrique et présente une ouverture d'entrée (27) sur sa surface circonférentielle (26), **caractérisé en ce que** la largeur (BE) de l'ouverture d'entrée (27) s'élargit et/ou se rétrécit dans la direction circonférentielle de la soupape rotative (25) et **en ce que** le deuxième courant d'air d'alimentation (13) peut être régulé sans déviation au moyen de la soupape rotative (25).

2. Dispositif de filature à fibres libérées (1) avec un cylindre défibreur (5) tournant dans un carter (2) de cylindre défibreur, dans lequel le carter (2) de cylindre défibreur présente une première paroi latérale (15) définissant une direction X du carter (2) de cylindre défibreur, dans laquelle est disposée une ouverture de séparation de salissures (10) raccordée à l'air ambiant, qui permet un premier courant d'air d'alimentation (12), dans lequel le carter (2) de cylindre défibreur présente une ouverture d'aspiration (20) raccordée à l'air ambiant, qui permet un deuxième courant d'air d'alimentation (13) et qui est raccordée à un canal de dérivation (19) débouchant à l'intérieur du carter (2) de cylindre défibreur, dans lequel l'ouverture d'aspiration (20) est disposée dans une paroi latérale (16) supplémentaire ou dans une paroi circonférentielle extérieure (18) du carter (2) de cylindre défibreur, en particulier selon la revendication précédente, **caractérisé en ce que** l'ouverture d'aspiration (20) est disposée de sorte que le deuxième courant d'air d'alimentation (13) présente au moins une composante d'écoulement dans une direction Y orientée perpendiculairement à la direction X ou est entièrement orienté dans la direction Y, de sorte que, lorsque le dispositif de filature à fibres libérées (1) est monté dans une machine de filature, le deuxième courant d'air d'alimentation (13) est aspiré par le haut ou par le côté-haut.

3. Dispositif de filature à fibres libérées (1) selon la revendication précédente, **caractérisé en ce que** la paroi latérale (16) supplémentaire comportant l'ouverture d'aspiration (20) est orientée dans la direction X ou présente un angle inférieur à 50°, de préférence inférieur à 45°, par rapport à la direction X.

4. Dispositif de filature à fibres libérées (1) selon l'une quelconque des revendications précédentes, **caractérisé en ce que** l'ouverture d'aspiration (20) est disposée dans une zone détournée de l'ouverture de séparation de salissures (10), en particulier opposée à celle-ci, d'une paroi circonférentielle extérieure (18) du carter (2) de cylindre défibreur.

5. Dispositif de filature à fibres libérées (1) selon l'une quelconque des revendications précédentes, **caractérisé en ce qu'**une surface d'écran (21) pour une bande de transport (22) de salissures est disposée en dessous de l'ouverture d'aspiration (20), en particulier sur la première paroi latérale (15) du carter (2) de cylindre défibreur ou dans une zone de la paroi circonférentielle extérieure (18) du carter (2) de cylindre défibreur tournée vers l'ouverture de séparation de salissures (10), en particulier disposée à côté de l'ouverture de séparation de salissures (10).

6. Dispositif de filature à fibres libérées (1) selon la revendication 1, **caractérisé en ce que** l'ouverture d'entrée (27) de la soupape rotative (25) se présente sous une forme triangulaire, trapézoïdale ou parabolique et/ou **en ce que** l'ouverture d'entrée (27) se présente sous une forme asymétrique.

7. Dispositif de filature à fibres libérées (1) selon l'une quelconque des revendications 1 ou 6, **caractérisé en ce que** le deuxième courant d'air d'alimentation (13) peut être régulé sans déviation au moyen de la soupape rotative (25) sur toute une plage d'ouverture (28) de la soupape rotative (25).

8. Dispositif de filature à fibres libérées (1) selon l'une quelconque des revendications 1, 6 ou 7, **caractérisé en ce que** la soupape rotative (25) est insérée dans le canal de dérivation (19), en particulier, est insérée dans le canal de dérivation (19) avec son axe principal (HA) parallèle à un axe de rotation (DA) du cylindre défibreur (5).

9. Dispositif de filature à fibres libérées (1) selon l'une quelconque des revendications 1 ou 6 à 8, **caractérisé en ce qu'**une largeur maximale (BE) de l'ouverture d'entrée (27) de la soupape rotative (25) correspond au moins à une largeur de l'ouverture d'aspiration (20) du carter (2) de cylindre défibreur.

10. Dispositif de filature à fibres libérées (1) selon l'une quelconque des revendications 1 ou 6 à 9, **caractérisé en ce que** la soupape rotative (25) et/ou le canal de dérivation (19) présente(nt) un verrouillage (30) ou une butée (29) au moins pour une position ouverte et une position fermée de la soupape rotative (25).

11. Dispositif de filature à fibres libérées (1) selon l'une quelconque des revendications précédentes, **caractérisé en ce que** le canal de dérivation (19) débouche à l'intérieur du carter (2) de cylindre défibreur selon un angle (W) aigu, en particulier un angle (W) de 10° à 50°, de préférence de 15° à 40° et de manière particulièrement préférée de 20° à 30°.

12. Dispositif de filature à fibres libérées (1) selon l'une quelconque des revendications précédentes, **caractérisé en ce que** le canal de dérivation (19) présente une largeur sensiblement constante depuis l'ouverture d'aspiration (20) jusqu'à une bouchure (11).
